# EUROPEAN PATENT APPLICATION

(11) **EP 4 261 794 A1**
(43) Date of publication of application: **18.10.2023**
(21) Application number: 23167620.6
(22) Date of filing: 12.04.2023
(51) Int. Cl.: G06V 20/69, G06V 10/75, G06F 18/2415

(54) **IMAGE PROCESSING DEVICE, DATA MANAGEMENT DEVICE, IMAGE PROCESSING SYSTEM, IMAGE PROCESSING METHOD, AND NON-TRANSITORY STORAGE MEDIUM**

(30) Priority: 13.04.2022 JP 2022066601; 03.04.2023 JP 2023060223
(71) Applicant: ARKRAY, Inc., Kyoto-shi, Kyoto 601-8045 (JP)
(72) Inventor: FUJIMOTO, Koji, Kyoto, 602-0008 (JP)
(74) Representative: Dehns

(57) **Abstract**

An image processing device (10) including an acquisition section (11A) that acquires plural material component images, a first classification section (11B) that classifies the plural material component images as detected components for respective prescribed classifications and computes a goodness of fit for classification results, and a transmission section (11D) that, based on the computed goodness of fit, transmits designated material component images from among the plural material component images via a network line to a data management device.

## Description

### BACKGROUND

### Technical Field

The present invention relates to an image processing device, a data management device, an image processing system, an image processing method, and a non-transitory storage medium.

For example, an information processing device described in Japanese Patent Application Laid-Open (JP-A) No. 2020-085535 suppresses erroneous operation from occurring in classification work for cases in which re-classification is performed on material component images classified by respective prescribed classification by image capturing in a flow system. This information processing device includes a classification section and a control section. The classification section extracts a material component image recognized as a material component from plural images obtained by imaging a sample fluid containing plural types of material components and flowing through a flow cell, and classifies the extracted material component images as detected components by prescribed classification. The control section performs control so as to, when re-classifying a material component image already classified as a detected component by the classification section into a different classification, to receive a selection of a movement destination classification in a state in which a first image list of material component images contained in a classification of detected components is being displayed on a display, and moreover to move a material component image selected from the first image list to a second image list of material component images contained in a classification of the movement destination in a state in which the first image list and the second image list are both being displayed at the same time on the display.

Moreover, Japanese Patent Application Laid-Open (JP-A) No. 2000-258335 describes a urine sediment analyzer capable of shortening the time to establish a sediment of diverse sedimentary components in urine and capable of raising analysis efficiency. This urine sediment analyzer includes an optical system that captures images of cells in a test sample, an image processing unit that extracts features of cells present in the captured images, an analysis section including a discrimination determination section that performs automatic morphological classification of cells from extracted features, and a data manipulation section that displays the results of automatic classification and captured images, and that performs re-classification thereof. This urine sediment analyzer includes a main data manipulation section having a function to perform viewing and re-editing of analysis results including a re-classification result decision right, and includes plural secondary data manipulation sections not having a re-classification result decision right, and the classification results are finalized by the main data manipulation section, or by the main data manipulation section based on results of re-classification by the secondary data manipulation sections.

Japanese Patent No. 6277702 describes an image processing method executed by an image processing device capable of communicating with another device in a laboratory examination information system. This image processing method includes a step of capturing two or more images of a sample, a step of selecting an image to transmit to the other device from the captured images, and a step of transmitting the selected image to the other device, configured in the following manner. The images that were captured in the imaging step are associated with information designating a patient and components are associated with the patient. In the selection step, at least an image containing an component other than the component associated with the patient who was associated with the images captured in the imaging step is selected as the image to be transmitted to the other device.

However, sometimes in cases in which material component images are classified as detected components for the respective prescribed classifications, a trained model installed in the image processing device is a model that has been pre-trained by machine learning. However, always maintaining the latest state of the trained model installed in the image processing device is not easy, and so appropriately classifying a diversity of material component images using only the trained model installed in the image processing device is difficult. The technologies of JP-A Nos. 2020-085535, 2000-258335, and Japanese Patent No. 6277702 do not consider material component images that are difficult to classify.

### SUMMARY

In consideration of the above circumstances, the present disclosure describes an image processing device capable of transmitting material component images that an image processing device finds difficult to appropriately classify into each prescribed classification to a data management device that executes processing related to classification processing to classify material component images, and to a data management device, an image processing system, an image processing method, and a non-transitory storage medium of the same.

The image processing device according to a first aspect of the present invention includes an acquisition section that acquires plural material component images, a first classification section that classifies the plural material component images as detected components for respective prescribed classifications and computes a goodness of fit for classification results, and a transmission section that, based on the goodness of fit computed by the first classification section, transmits designated material component images from among the plural material component images via a network line to a data management device.

A data management device according to an aspect of the present invention includes a data management device configured to be connected to the above image processing device via a network line. The data management device includes a second classification section that classifies designated material component images received from the image processing device as detected components, and a return section that returns classification results determined by the second classification section to the image processing device.

An image processing system according to an aspect of the present invention is an image processing system including an image processing device and a data management device connected to the image processing device via a network line. The image processing device includes an acquisition section that acquires plural material component images, a first classification section that classifies the plural material component images as detected components for respective prescribed classifications and computes a goodness of fit for classification results, and a transmission section that, based on the goodness of fit computed by the first classification section, transmits designated material component images from among the plural material component images to the data management device. The data management device includes a second classification section that classifies the designated material component images received from the image processing device as detected components, and a return section that returns classification results by the second classification section to the image processing device.

An image processing method according to an aspect of the present invention is performed by an image processing device. The method comprises: acquiring a plurality of material component images; classifying the plurality of material component images as detected components for respective prescribed classifications and computing a goodness of fit for classification results; and based on the computed goodness of fit, transmitting designated material component images from among the plurality of material component images via a network line to a data management device.

A non-transitory storage medium according to an aspect of the present invention is stored with an image processing program that causes a computer to execute processing. The processing includes acquiring plural material component images, classifying the plural material component images as detected components for respective prescribed classifications, computing a goodness of fit for classification results, and, based on the computed goodness of fit, transmitting designated material component images from among the plural material component images via a network line to a data management device.

As described above, the at least embodiments of the present invention enable transmission of material component images that are difficult to classify in an image processing device to a data management device where classification processing is executed to classify these material component images.

### BRIEF DESCRIPTION OF THE DRAWINGS

Exemplary embodiments of the present invention will be described in detail based on the following figures, wherein:
Fig. 1 is a perspective view illustrating part of a configuration of a measurement system according to a first exemplary embodiment;
Fig. 2 is a schematic view illustrating an example of a configuration of a measurement system according to the first exemplary embodiment;
Fig. 3 is a block diagram illustrating an example of an electrical configuration of an image processing system according to the first exemplary embodiment;
Fig. 4 is a block diagram illustrating an example of a functional configuration of an image processing device according to the first exemplary embodiment;
Fig. 5 is a face-on view illustrating an example of a measurement result screen according to an exemplary embodiment;
Fig. 6 is a face-on view illustrating an example of a material component image list screen according to an exemplary embodiment;
Fig. 7 is a diagram to accompany explanation of designation processing for material component images to be transmitted to a data management device according to an exemplary embodiment;
Fig. 8 is a block diagram illustrating an example of a functional configuration of a data management device according to the first exemplary embodiment;
Fig. 9 is a diagram accompany explanation of material component image classification processing by a data management device according to an exemplary embodiment;
Fig. 10 is a flowchart illustrating an example of a flow of processing by an image processing program according to the first exemplary embodiment;
Fig. 11 is a flowchart illustrating an example of a flow of processing by a data management program according to the first exemplary embodiment;
Fig. 12 is a block diagram illustrating an example of a functional configuration of an image processing device according to a second exemplary embodiment; and
Fig. 13 is a flowchart illustrating an example of a flow of processing by an image processing program according to the second exemplary embodiment.

### DETAILED DESCRIPTION

Detailed description follows regarding an example of an embodiment for implementing technology disclosed herein, with reference to the drawings. Note that the configuration components and processing having actuations, operations, and functions with the same effect are appended with the same reference numerals throughout the drawings, and sometimes duplicate description thereof will be omitted as appropriate. These drawings are merely to facilitate sufficient understanding of the technology disclosed herein, and are no more than schematic illustrations thereof. The technology disclosed herein is accordingly not limited to the illustrated examples. Moreover, in the present exemplary embodiment, sometimes configurations not directly related to the present invention and peripheral configurations thereto are omitted from explanation.

### First Exemplary Embodiment

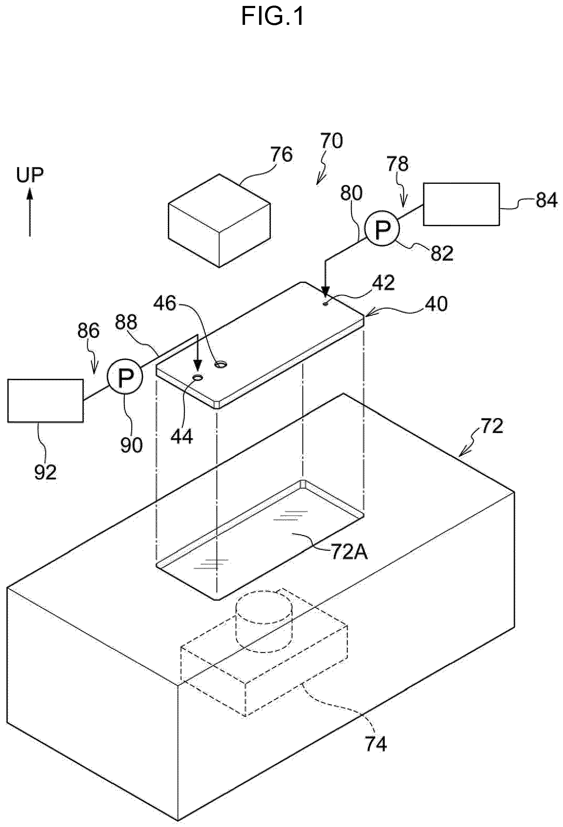

Fig. 1 is a perspective view illustrating part of a configuration of a measurement system 70 according to a first exemplary embodiment.

As illustrated in Fig. 1, the measurement system 70 according to the present exemplary embodiment includes a flow cell 40, casing 72, a camera 74, and a light source 76. Note that the arrow UP in Fig. 1 indicates upward in an up-down direction of the measurement system 70.

The flow cell 40 according to the present exemplary embodiment is, for example, applicable to urinary material component examinations (urinary sediment examinations) in which a urine sample serving as an example of a sample fluid is introduced together with a sheath fluid in order to capture images of material components in the urine sample using the camera 74 and to perform various analyses based on the morphology etc. of the material components in the captured image. The camera 74 is an example of an imaging section. Plural types of material components are contained in the urine sample. Examples of types of material components include red blood cells, white blood cells, epithelial cells, casts, bacteria, and the like. Note that although in the present exemplary embodiment a case is described in which a urine sample serving as an example of a sample fluid is used to perform a urinary material component examination, blood, cells, bodily fluids, or the like may also be employed for material component examination.

The measurement system 70 includes the casing 72 to place the flow cell 40 in. A recess 72A for inserting the flow cell 40 into is formed in the casing 72. A position of the casing 72 that includes where the recess 72A is provided is formed by a transparent member (for example glass). The camera 74 is provided inside the casing 72 at a position facing toward the flow cell 40. The light source 76 is provided at the upper side of the casing 72, at a position facing toward the camera 74 across the flow cell 40. The camera 74 is disposed at a position that enables the sample fluid flowing through the flow cell 40 to be imaged.

The measurement system 70 includes a first supply device 78 to supply the sample fluid into a sample intake port 42 of a sample flow path (not illustrated in the drawings) in the flow cell 40. The first supply device 78 includes a supply tube 80 having one end connected to the sample intake port 42, a pump 82 provided partway along the supply tube 80, and a sample storage section 84 that is connected to the other end of the supply tube 80 and that is employed for storing the sample fluid.

The measurement system 70 includes a second supply device 86 to supply the sheath fluid into a sheath intake port 44 of a sheath flow path (not illustrated in the drawings) in the flow cell 40. The second supply device 86 includes a supply tube 88 having one end connected to the sheath intake port 44, a pump 90 provided partway along the supply tube 88, and a tank 92 that is connected to the other end of the supply tube 88 and that is employed for storing the sample fluid.

A discharge port 46 is also provided to the flow cell 40 between the sample intake port 42 and the sheath intake port 44. One end of a discharge tube (not illustrated in the drawings) is connected to the discharge port 46, and the other end of the discharge tube is connected to a waste tank (not illustrated in the drawings). The flow cell 40 includes a merging section (not illustrated in the drawings) to merge the sample introduced through the sample intake port 42 with the sheath fluid introduced through the sheath intake port 44, and the merged fluid flows through a flow path. The material components in the sample fluid are imaged by the camera 74.

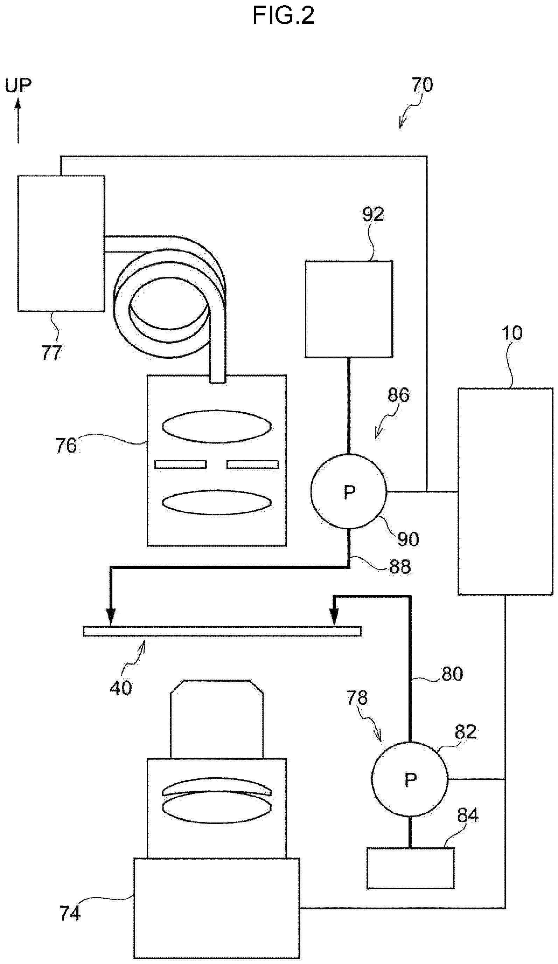

Fig. 2 is a schematic diagram illustrating an example of a configuration of the measurement system 70 according to the first exemplary embodiment.

As illustrated in Fig. 2, the measurement system 70 according to the present exemplary embodiment includes an image processing device 10. Note that the arrow UP in Fig. 2 indicates upward in the up-down direction of the measurement system 70, similarly to in Fig. 1.

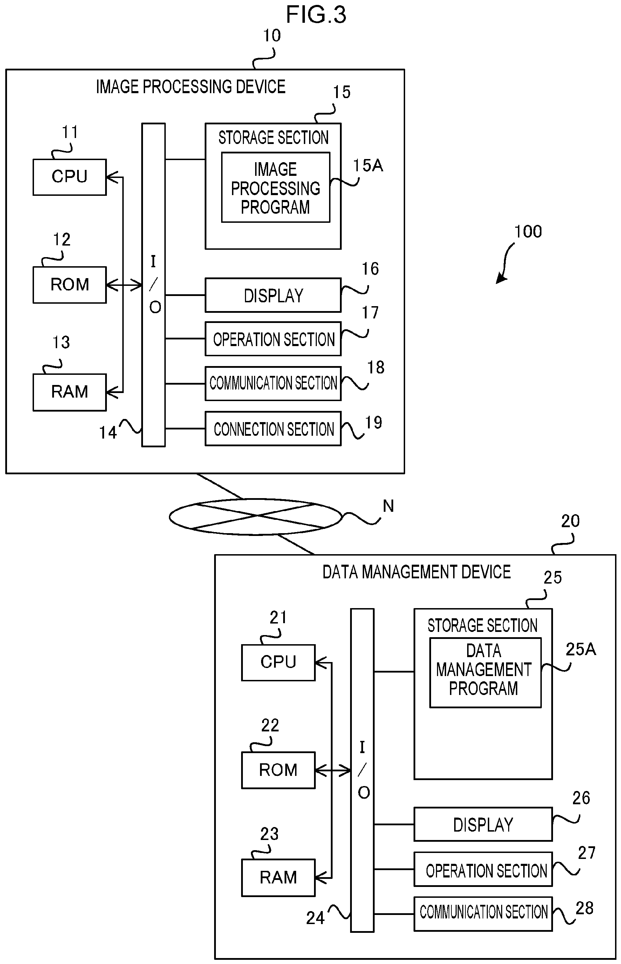

The image processing device 10 includes the functionality of a control device to control the respective operations of the camera 74, a light source actuation section 77 electrically connected to the light source 76, the pump 82, and the pump 90. The image processing device 10 applies a pulse signal to the light source actuation section 77 so as to cause the light source 76 to emit light at a prescribed interval. The image processing device 10 drives the pump 82 to control the flow rate of the sample fluid, and drives the pump 90 to control the flow rate of the sheath fluid. Although not illustrated in the drawings, plural of the cameras 74 and optical systems to guide light to the respective cameras 74 may be provided. Each optical system is adjusted such that the respective cameras 74 focus on different positions (depths) within the flow cell 40. In other words, from the same position as each other in a horizontal plane, the plural cameras 74 capture plural images at the same time while focusing on different depth positions. These simultaneously captured images are associated with each other and stored in a storage section 15 illustrated in Fig. 3, described later. The depth direction here is a direction perpendicular to the flow direction of the sample fluid, and corresponds to the up-down direction in Fig. 2. The respective focal points are at different distances from a wall face of the flow cell 40 on a side near the cameras 74.

Fig. 3 is a block diagram illustrating an example of an electrical configuration of an image processing system 100 according to the first exemplary embodiment.

As illustrated in Fig. 3, the image processing system 100 according to the present exemplary embodiment includes the image processing device 10 and a data management device 20. The image processing device 10 is connected to the data management device 20 via a network line N. The image processing device 10 includes a central processing unit (CPU) 11, read only memory (ROM) 12, random access memory (RAM) 13, an input-output interface (I/O) 14, the storage section 15, a display 16, an operation section 17, a communication section 18, and a connection section 19. Note that the CPU 11 may, for example, be a processor such as a graphics processing unit (GPU).

For example, a generic computer such as a personal computer (PC) is employed as the image processing device 10 according to the present exemplary embodiment. Note that a portable computer such as a smartphone, tablet terminal, or the like may also be employed as the image processing device 10. The image processing device 10 may also be split between plural units. For example, the image processing device 10 may be configured so as to include a unit for controlling a measurement system composed of the camera 74, the light source 76, the pump 82, the pump 90 etc., and to include a unit to perform processing and analysis on images captured by the camera 74. The image processing device 10 may be an external device connected to the measurement system 70.

A control device is configured by the CPU 11, the ROM 12, the RAM 13, and the I/O 14. The control device includes, for example, a function to control a measurement system composed of the camera 74, the light source 76, the pump 82, the pump 90 etc., and to include a function to perform processing and analysis on images captured by the camera 74. Each of the sections of the CPU 11, the ROM 12, the RAM 13, and the I/O 14 are connected together through a bus.

Each of the functional sections including the storage section 15, the display 16, the operation section 17, the communication section 18, and the connection section 19 are connected to the I/O 14. These functional sections are capable of communicating with the CPU 11 through the I/O 14.

The control device may be configured as a sub-control section to control the operation of part of the image processing device 10, or may be configured as part of a main control section to control overall operation of the image processing device 10. For example, integrated circuits such as large scale integrated (LSI) circuits or integrated circuit (IC) chip sets are employed for some or all of the respective blocks of the control device. A separate circuit may be employed for each block, or circuits may be employed that integrate some or all of the blocks together. The respective blocks may be provided so as to be integrated together, or some of the blocks may be provided separately. Alternatively, parts of the respective blocks may be provided separately. Integration of the control device is not limited to integration employing LSIs, and dedicated circuits or generic processors may also be employed therefor.

Examples of the storage section 15 include a hard disk drive (HDD), a solid state drive (SSD), a flash memory, or the like. An image processing program 15A to perform image classification processing according to the present exemplary embodiment is stored in the storage section 15. Note that the image processing program 15A may alternatively be stored in the ROM 12. Note that the storage section 15 may have external memory that can be expanded later.

The image processing program 15A may, for example, be pre-installed in the image processing device 10. The image processing program 15A may be stored on a non-volatile non-transitory storage medium, or may be implemented by being distributed via the network line N and installed or uploaded to the image processing device 10 as appropriate. Note that envisaged examples of non-volatile non-transitory storage medium include compact disc read only memory (CD-ROM), a magneto-optical disc, an HDD, digital versatile disc read only memory (DVD-ROM), flash memory, a memory card, and so on.

For example, a liquid crystal display (LCD) or an organic electro luminescence (EL) display may be employed as the display 16. The display 16 may include an integral touch panel. A device for operation input, such a keyboard or a mouse may, for example, be provided to the operation section 17. The display 16 and the operation section 17 receive various instructions from a user of the image processing device 10. The display 16 displays various information, such as the result of processing executed in response to an instruction received from the user and notifications relating to processing.

The communication section 18 is connected to the network line N such as the internet and a local area network (LAN), a Wide Area Network (WAN), or the like, and enables communication with the data management device 20 over the network line N.

The connection section 19 is, for example, connected to the camera 74, the light source 76, the pump 82, and the pump 90 etc. A measurement system of the camera 74, the light source 76, the pump 82, and the pump 90 etc. is controlled by the above control device. The connection section 19 also functions as an input port to input images output by the camera 74.

The data management device 20 according to the present exemplary embodiment includes a CPU 21, ROM 22, RAM 23, an input-output interface (I/O) 24, a storage section 25, a display 26, an operation section 27, and a communication section 28. Note that the CPU 21 may, for example, be a processor such as a GPU.

A generic computer such as a server computer is employed, for example, as the data management device 20 according to the present exemplary embodiment. The data management device 20 performs more data processing than the image processing device 10, and so the memory of the data management device 20 preferably has an access speed faster than that of the memory of the image processing device 10, and the CPU of the data management device 20 preferably has a processing speed faster than that of the CPU of the image processing device 10.

A control section is configured by the CPU 21, the ROM 22, the RAM 23, and the I/O 24. The sections of the CPU 21, the ROM 22, the RAM 23, and the I/O 24 are connected together through a bus.

Each functional section including the storage section 25, the display 26, the operation section 27, and the communication section 28 is connected to the I/O 24. Each of these functional sections is able to communicate with the CPU 21 through the I/O 24.

An HDD, SSD, flash memory, or the like is employed, for example, as the storage section 25. A data management program 25A for performing image classification processing according to the present exemplary embodiment is stored in the storage section 25. Note that the data management program 25A may be stored on the ROM 22. Note that the storage section 25 may have external memory that can be expanded later.

The data management program 25A may, for example, be pre-installed on the data management device 20. The data management program 25A is stored on a non-volatile non-transitory storage medium or distributed over the network line N, and may be implemented by being installed and upgraded on the data management device 20 as appropriate. Note that envisaged examples of the non-volatile non-transitory storage medium include a CD-ROM, magneto-optical disc, HDD, DVD-ROM, flash memory, memory card and the like.

For example, a liquid crystal display (LCD) or an organic electro luminescence (EL) display may be employed as the display 26. The display 26 may include an integral touch panel. A device for operation input, such a keyboard or a mouse may, for example, be provided to the operation section 27. The display 26 and the operation section 27 receive various instructions from a user of the data management device 20. The display 26 displays various information, such as the result of processing executed in response to an instruction received from the user and notifications relating to processing.

The communication section 28 is connected to the network line N such as the internet, a LAN, or a WAN, and is capable of communicating with the image processing device 10 over the network line N.

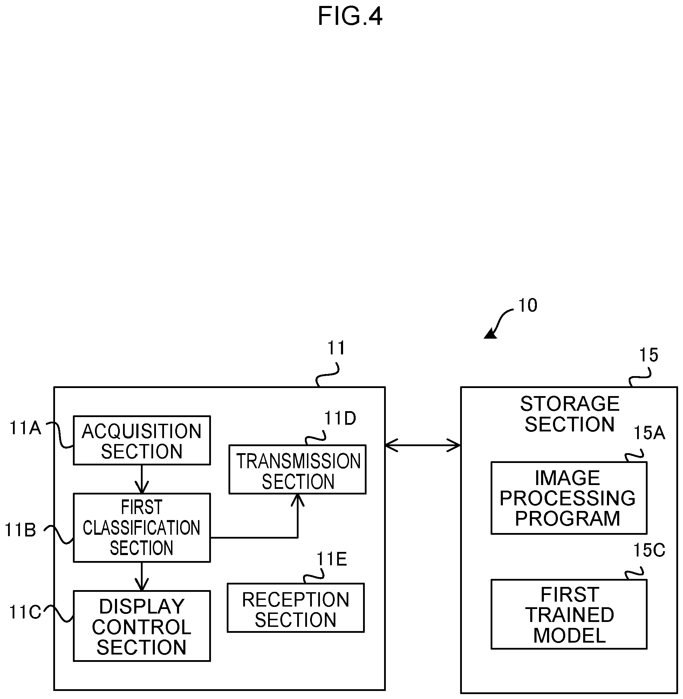

Explanation follows regarding a functional configuration of the image processing device 10 according to the first exemplary embodiment, with reference to Fig. 4.

The CPU 11 of the image processing device 10 according to the present exemplary embodiment functions as the respective sections illustrated in Fig. 4 by writing the image processing program 15A stored in the storage section 15 into the RAM 13 and executing the image processing program 15A.

Fig. 4 is a block diagram illustrating an example of a functional configuration of the image processing device 10 according to a first exemplary embodiment.

As illustrated in Fig. 4, the CPU 11 of the image processing device 10 according to the present exemplary embodiment functions as an acquisition section 11A, a first classification section 11B, a display control section 11C, a transmission section 11D, and a reception section 11E.

A first trained model 15C employed for image classification processing is stored in the storage section 15. The first trained model 15C is a model employed in image classification processing by the first classification section 11B.

From plural images (for example, 300 images, 1000 images) obtained by using the camera 74 to image the sample fluid flowing in the flow cell 40, the acquisition section 11A extracts, as material component images, plural types of material component contained in the sample fluid, and acquires plural extracted material component images.

The first classification section 11B classifies the plural material component images acquired by the acquisition section 11A as detected components for respective prescribed classification (for example, type, size, shape, etc. of material component, presence or absence of nucleus, and the like). Groups of material component images classified into the respective prescribed classifications by the first classification section 11B are temporarily stored in the storage section 15 by sample. Various known technology may be employed as the method for classifying the material component images, with examples thereof including machine learning methods, pattern matching methods, and the like. The material component image groups according to the present exemplary embodiment are, for example, classified using the first trained model 15C. The first trained model 15C is a model generated by machine learning performed on training data obtained by associating detected components for the respective prescribed classifications with respective material component images acquired in the past. Namely, such training data is supervised data. The first trained model 15C uses the material component images as input, and outputs the detected components in the respective prescribed classifications. A convolutional neural network (CNN) or the like may, for example, be employed in the training model to perform machine learning. Deep learning or the like may, for example, be employed as the machine learning method. The material component image groups are sometimes called material component images to describe individual material component images therein.

Moreover, when the material component images are being classified, the first classification section 11B computes a goodness of fit based on the image classification method being employed (for example, machine learning, pattern matching, or the like). The goodness of fit indicates a classification certainty for an image in the classification results, with the images in each prescribed classification being given higher values for higher proportions of matches to correct answer images or to predetermined feature points. The goodness of fit is 100% for cases in which there is a complete match to the correct answer images or the feature points. Namely, any material component image having a comparatively low goodness of fit may be thought of as having a high possibility of not being appropriately classified. Note that the goodness of fit may be expressed as precision.

The goodness of fit is a value that may vary depending on image quality of the material component in the material component image. Specifically, in an image in which a material component is focused, since determination is easy by classification using machine learning or the like, a goodness of fit to a correct classification is high, and a goodness of fit to an incorrect classification is low. However, an image in which the material component is not in focus, i.e., an image in which the material component is blurred, has a lower goodness of fit to a correct classification, and the difference between the goodness of fit to the correct classification and the goodness of fit to an incorrect classification is also small. Further, in an image in which plural material components are superimposed, the goodness of fit may be a low value. In addition, rare items in samples not previously trained by a trained model that should be correctly determined as unclassified are sometimes determined as being trained items, but the goodness of fit in such cases is a low value.

The display control section 11C performs control to display the material component images classified by the first classification section 11B as detected components on the display 16 as individual material component images. Such an approach enables a user such as an examination technician or the like to check the individual material component images visually.

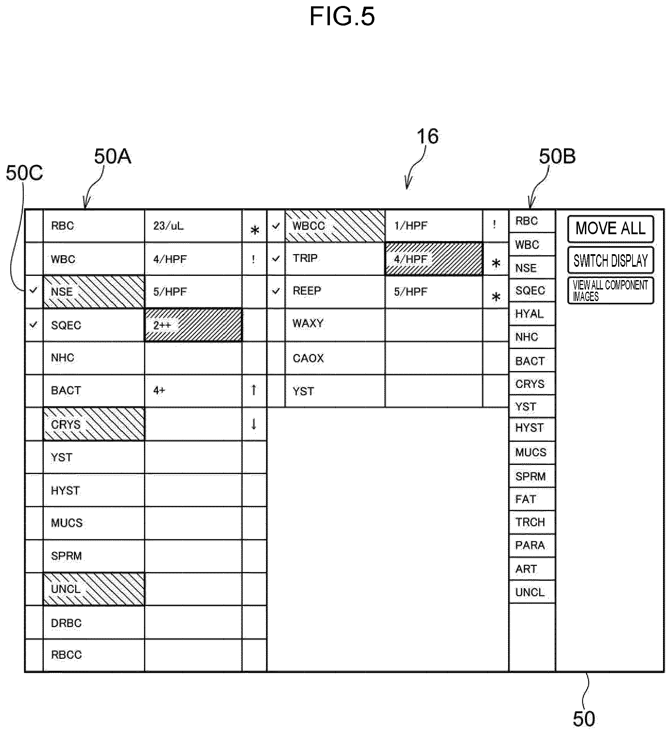

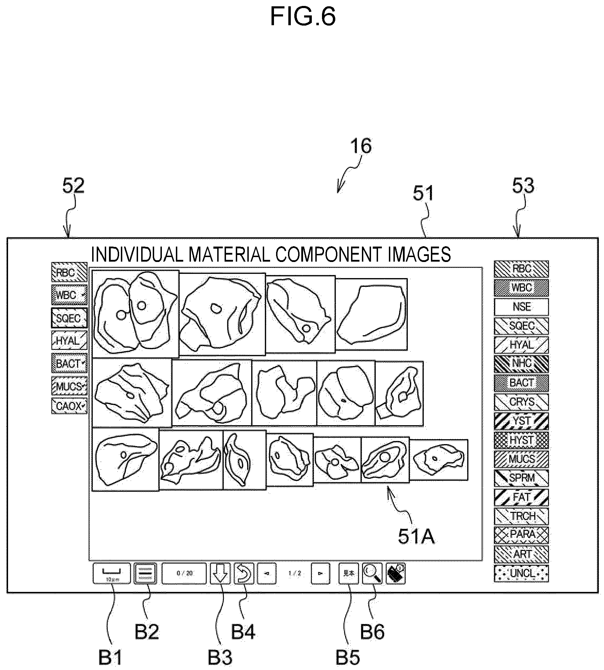

Description follows regarding specific examples of screens in the image classification processing according to the present exemplary embodiment, with reference to Fig. 5 and Fig. 6.

Fig. 5 is a face-on view illustrating an example of a measurement result screen 50 according to the present exemplary embodiment. The measurement result screen 50 is displayed on the display 16 by the display control section 11C.

As illustrated in Fig. 5, the measurement result screen 50 according to the present exemplary embodiment displays an overview of measurement results by item. The measurement results are displayed as the material component name, the content or content count of this component, qualitative displays as indices for content, or the like. Material component names 50A and material component buttons 50B are also provided on the measurement result screen 50.

Main items among the items illustrated as material components in Fig. 5 include, for example, RBC indicating red blood cells, WBC indicating white blood cells, NSE indicating non-squamous epithelial cells, SQEC indicating squamous epithelial cells, NHC indicating non-hyaline casts, and BACT indicating bacteria. Moreover, CRYS indicating crystals, YST indicating yeast, HYST indicating hyaline casts, MUCS indicating mucus, SPRM indicating spermatozoa, and WBCC indicating white blood cell clumps are also illustrated. UNCL indicates material components other than red blood cells, white blood cells, non-squamous epithelial cells, squamous epithelial cells, non-hyaline casts, bacteria, crystals, yeast, hyaline casts, mucus, spermatozoa, and white blood cell clumps, or indicates foreign matter not originating in a urine sample, such as hair and dust for example (hereafter sometimes referred to as unclassified). Namely, detected components in each prescribed classification as classified by the first classification section 11B correspond to items indicated as being each of these material components, and defined classifications as items indicated as being unclassified.

The display control section 11C performs control to apply a mark on the measurement result screen 50 indicating check completion to each classification for which the image list (see, for example, Fig. 6, described later) corresponding to a classification selected from the classification items has been displayed and the material component images have been checked. In the measurement result screen 50 illustrated in Fig. 5, a mark 50C indicating check completion is applied to each item out of the classification items for which the first image list has been checked. Note that when re-classification (classification change) has been performed, measurement results reflecting the outcome of the change are displayed.

When one of the material component names 50A or the material component buttons 50B on the measurement result screen 50 illustrated in Fig. 5 is selected by a click operation or the like, individual material component images corresponding to the selected classification item are displayed on the display 16, as in the material component image list screen 51 illustrated in Fig. 6 as an example.

Fig. 6 is a face-on image illustrating an example of the material component image list screen 51 according to the present exemplary embodiment.

As illustrated in Fig. 6, a material component image list 51A in which images for which a material component check is desired have been selected is displayed on the material component image list screen 51 according to the present exemplary embodiment. The material component image list screen 51 is displayed on the display 16.

The material component image list screen 51 illustrated in Fig. 6 includes a first item button array 52 corresponding to the detected components, and a second item button array 53 corresponding to movement destinations. The first item button array 52 of the detected components is provided corresponding to each type of detected component. Similarly the second item button array 53 of movement destinations is provided corresponding to each classification item that is a movement destination. As an example, as described above RBC indicating red blood cells, WBC indicating white blood cells, SQEC indicating squamous epithelial cells, and UNCL indicating unclassified are displayed. Fig. 6 illustrates an example of a state in which SQEC has been selected from the first item button array 52 of the detected components, and so the material component image list screen 51 displays a list of images of squamous epithelial cells.

In the material component image list screen 51 illustrated in Fig. 6, plural operable operation buttons B1 to B6 are also displayed. The operation button B1 is a button to enlarge display of the material component images and also display the scale (length) together with the image enlargement. In the example illustrated in Fig. 6, the scale displayed is 10 µm/pixel. The operation button B2 is a button to switch display to material component images at a different focal position. In the example illustrated in Fig. 6, the focal position in the depth direction of the flow cell 40 is switchable between three layers, namely an upper layer, a middle layer, and a lower layer. The operation button B3 is a button to move a material component image of a detected component to a movement destination. The operation button B4 is a button to return to the preceding image classification editing operation. The operation button B5 is a button to display "reference" material component images, described later. The operation button B6 is a button to display a window used to set an enlargement ratio of the material component images and to set the brightness, contrast ratio, and the like of the material component images.

Material component image display modes can be changed by operation of the plural operation buttons B1 to B6 illustrated in Fig. 6, thereby making the material components easier to distinguish. Note that each of the operation buttons may be displayed on the display 16 configured by a touch panel, or may be provided as the operation section 17.

When any item button from the second item button array 53 of movement destinations has been selected by a click operation or the like on the material component image list screen 51 illustrated in Fig. 6, the re-classification task screen (omitted in the drawings) is displayed. On the re-classification task screen, a first image list of detected components and a second image list of movement destination are displayed on a single screen.

Note that in the material component image list 51A illustrated in Fig. 6, the goodness of fit as computed by the first classification section 11B may be configured so as to be displayed together with material component images.

Returning to Fig. 4, the transmission section 11D controls the communication section 18, designates designated material component images from among the plural material component images based on the goodness of fit as computed by the first classification section 11B, and transmits the designated material component images that were designated to the data management device 20 via the network line N. Namely, the designated material component images can be said to be material component images designated based on the goodness of fit as computed by the first classification section 11B. These designated material component images include, for example, unclassified material component images that were unable to be classified as detected components for the respective prescribed classifications by the first classification section 11B (in other words, that were classified as not belonging to any prescribed classification by the first classification section 11B).

It is also possible to transmit plural material component images, whose goodness of fit is within a predetermined range, to the data management device 20. For example, plural material component images whose goodness of fit is less than the upper limit, or plural material component images whose goodness of fit is less than the upper limit and equal to or higher than the lower limit may be transmitted to the data management device 20. For example, plural material component images whose goodness of fit is less than 70% may be transmitted to the data management device 20, or plural material component images whose goodness of fit is less than 70% and equal to or higher than 30% may be transmitted to the data management device 20. By setting an upper limit on the goodness of fit, it is possible to transmit only images that could not be correctly determined by the first classification section 11B, and by setting a lower limit on the goodness of fit, it is possible to exclude blurry images. Further, in the items shown in Fig. 5, only plural material component images having a high goodness of fit (e.g., 80% or more) in the item of "unclassified" may be transmitted to the data management device 20. In this case, rare items not shown in Fig. 5 can be transmitted to the data management device 20. Further, an upper limit or a lower limit may be set for the number of images to be transmitted to the data management device 20. For example, 100 images whose goodness of fit is less than 70% and whose goodness of fit is in descending order are transmitted to the data management device 20. An upper limit or a lower limit of the number of images to be transmitted may be set for each item shown in Fig 5. In particular, by setting an upper limit, the amount of data to be transmitted can be suppressed.

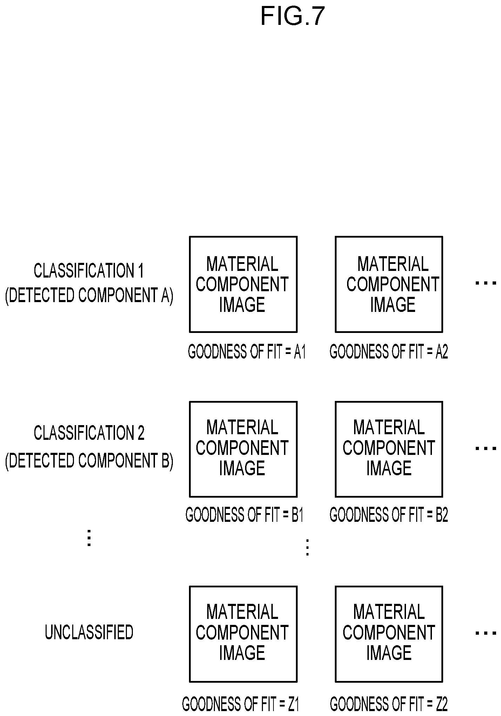

Fig. 7 is a diagram to accompany explanation of the designation processing for the material component images to be transmitted to the data management device 20 according to the present exemplary embodiment.

As illustrated in Fig. 7, the plural material component images are classified as detected components for the respective prescribed classifications using the first trained model 15C. When this is being performed, the goodness of fit is computed for each of the material component images. Note that in the first trained model 15C, machine learning is performed on material component images classifiable as detected components for the respective prescribed classifications, and also machine learning is performed on unclassified material component images that were unable to be classified as detected components for the respective prescribed classifications (in other words material component images picturing material components not belonging to any prescribed classification), with these being classified as "unclassified". In the example of Fig. 5, the classifiable material component images are classified under items "RBC", "WBC", "SQEC", and the like, and the material component images classified as "unclassified" are classified under item "UNCL". Note that from among the material component images classified as "UNCL", the possibility that a material component pictured in this material component image does not belong to any prescribed classification gets higher as the goodness of fit gets higher. The designated material component images transmitted to the data management device 20 may be designated manually by a user, and may be designated automatically by the image processing device 10.

For manual designation by the user, for example, the user looks at the goodness of fit for each material component image, and designates any material component images having a comparatively low goodness of fit. Note that all of the "unclassified" material component images may be designated. Moreover, the user may designate material component images in the classification results for which there is a particular concern.

In cases in which the designation is performed automatically in the image processing device 10, for example, any material component images having a goodness of fit of a threshold or lower are designated. Note that all of the "unclassified" material component images may be designated. Note that the thresholds referred to here are suitably settable to appropriate values by the user, and may be set as a different threshold for each of the prescribed classifications.

The material component images designated in the above manner are collected into a single folder, and are transmitted to the data management device 20 according to operation by the user. Image classification processing, described later, is executed in the data management device 20, and the classification results are returned to the image processing device 10.

The reception section 11E controls the communication section 18, and receives the classification result from the data management device 20 obtained by classifying the designated material component images into detected components.

Moreover, any material component image with a goodness of fit exceeding a threshold may either be transmitted to the data management device 20 or not transmitted thereto. Not transmitting material component images with a goodness of fit exceeding the threshold to the data management device 20 enables a reduction in the data volume transmitted to the data management device 20.

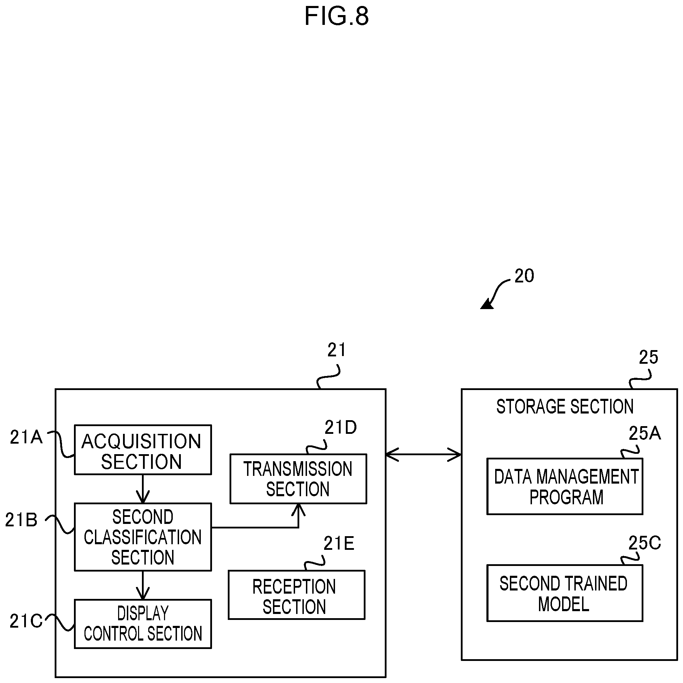

Next, description follows regarding a specific functional configuration of the data management device 20 according to the first exemplary embodiment, with reference to Fig. 8.

The CPU 21 of the data management device 20 according to the present exemplary embodiment functions as each of the sections illustrated in Fig. 8 by writing the data management program 25A stored in the storage section 25 into the RAM 23, and executing the data management program 25A.

Fig. 8 is a block diagram illustrating an example of a functional configuration of the data management device 20 according to the first exemplary embodiment.

As illustrated in Fig. 8, the CPU 21 of the data management device 20 according to the present exemplary embodiment functions as an acquisition section 21A, a second classification section 21B, a display control section 21C, a return section 21D, and a reception section 21E.

A second trained model 25C used in image classification processing is stored in the storage section 25. The second trained model 25C is a model employed in image classification processing by the second classification section 21B.

The reception section 21E controls the communication section 28, and receives the designated material component images from the image processing device 10. The designated material component images received from the image processing device 10 are temporarily stored in the storage section 25 as a classification target image group.

The acquisition section 21A acquires a material component image as a classification target from the classification target image group stored in the storage section 25.

The second classification section 21B classifies the material component images acquired by the acquisition section 21A as detected components for the respective prescribed classifications (for example, type, size, shape, etc. of material component, presence or absence of nucleus, and the like). The material component images classified for the respective prescribed classifications by the second classification section 21B are sent to the return section 21D. A method employing machine learning is, for example, applied as the method for classifying the material component images. In such cases, the material component images are, for example classified using the second trained model 25C. The second trained model 25C is, for example, a model generated by performing machine learning using separate training data having more associated detected components than in the training data of the first trained model 15C, and using the same algorithm as the algorithm for machine learning in the first trained model 15C. The volume of training data trained in the second trained model 25C is greater than the volume of training data trained in the first trained model 15C. Namely, the second trained model 25C has been trained so as to have a classification performance higher than that of the first trained model 15C.

Alternatively, the second trained model 25C may be a model generated by machine learning using the training data of the first trained model 15C, and using a separate algorithm having a higher classification performance than the machine learning algorithm of the first trained model 15C. Various methods are employed for such a machine learning algorithm, with examples including, in addition to a CNN described above, linear regression, regularization, decision tree, random forest, k-nearest neighbors algorithm (k-NN), logistic regression, support vector machine (SVM), and the like. In cases in which the classification performance of the trained model is, for example, higher for an SVM than for a CNN, then the CNN is adopted in the first trained model 15C and the SVM is adopted in the second trained model 25C. In contrast thereto, in cases in which the classification performance of the trained model is higher for a CNN than for an SVM, then the SVM is adopted in the first trained model 15C and the CNN is adopted in the second trained model 25C. Note that to compare the classification performance of trained models, a method may be employed in which pre-prepared test data is used to compute index values expressing model performance (for example, correct answer rate, precision, and the like) and the computed index values are compared.

Moreover, the second trained model 25C may be a model generated by machine learning employing separate training data having more associated detected components than in the training data of the first trained model 15C, and using a separate algorithm having a higher classification performance than the machine learning algorithm of the first trained model 15C.

Moreover, in cases in which version management is performed for the second trained model 25C, preferably the version of the second trained model 25C is managed so as to always be the latest version thereof.

The second classification section 21B may classify the material component images according to a classification operation by the user. Namely, the second classification section 21B may perform processing related to the classification processing. The user referred to here is preferably an examination technician or the like who is well versed in material component image classification.

More specifically, the display control section 21C performs control to display the designated material component images on the display 26 as classified targets. In such cases the second classification section 21B classifies the designated material component images according to classification operation by the user for the designated material component images being displayed on the display 26.

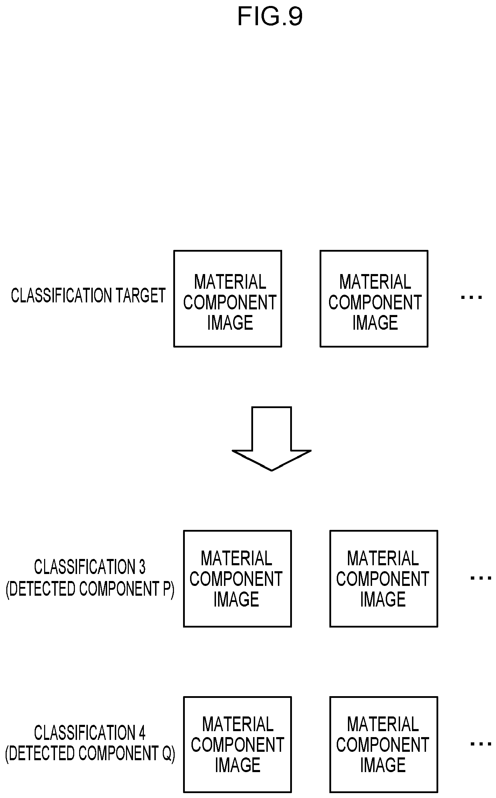

Fig. 9 is a diagram to accompany explanation of the material component image classification processing by the data management device 20 according to the present exemplary embodiment.

As illustrated in Fig. 9, the material component images serving as the classified targets for the data management device 20 are classified using the second trained model 25C having a higher classification performance than the first trained model 15C according to a classification operation by the user such as an examination technician or the like into, for example, a classification 3 for detected components P or a classification 4 for detected components Q. The material component images classified in the classification 3 and in the classification 4 are, for example, images that were unable to be classified by the image processing device 10, or are images having a high possibility that they were not correctly classified by the image processing device 10. These classification results are sent to the return section 21D.

Note that classifications by the second trained model 25C, or by a user such as an examination technician or the like, may be classified into detected components other than the detected components classifiable by image classification processing by the first trained model 15C (the first classification section 11B). Namely, classification by the second trained model 25C or by a user such as an examination technician or the like may be into items other than the items illustrated in Fig. 5 (for example, Mulberry bodies and heterocysts). Moreover, based on the classification results, a comment and a summary may be returned either appended to the classification results of the detected components, or instead of the classification results.

Returning to Fig. 8, the return section 21D controls the communication section 28, and returns the classification results by the second classification section 21B to the image processing device 10 via the network line N.

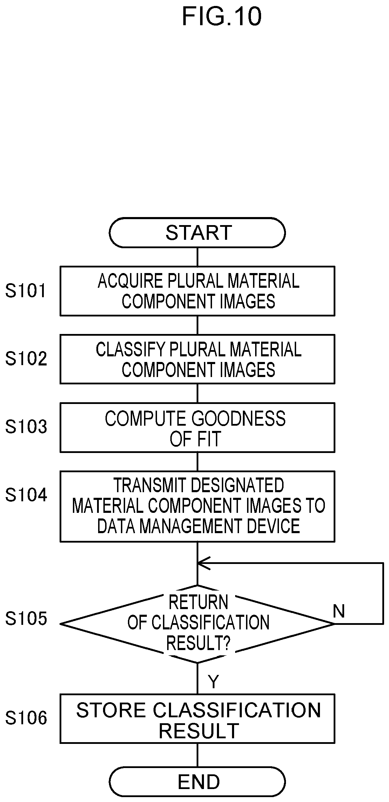

Next, description follows regarding operation of the image processing device 10 according to the first exemplary embodiment, with reference to Fig. 10.

Fig. 10 is a flowchart illustrating an example of a flow of processing by the image processing program 15A according to the first exemplary embodiment.

In the image classification processing by the image processing program 15A, the CPU 11 of the image processing device 10 writes the image processing program 15A stored on the ROM 12 or the storage section 15 to the RAM 13, and executes the image processing program 15A.

At step S101 of Fig. 10, from plural images (for example, 300 images, 1000 images) obtained by using the camera 74 to image the sample fluid flowing in the flow cell 40, the CPU 11 extracts, as material component images, plural types of material component contained in the sample fluid, and acquires plural extracted material component images.

At step S102, the CPU 11 uses the first trained model 15C to classify the plural material component images acquired at step S101 into, for example, detected components for the respective prescribed classifications (for example, type, size, shape, etc. of material component, presence or absence of nucleus, and the like). The material component images classified into the respective prescribed classifications are temporarily stored in the storage section 15 by sample. Various known technologies may be applied as the method for classifying the material component images, such as, for example, machine learning methods, pattern matching methods, and the like.

At step S103, the CPU 11 computes a goodness of fit for each of the material component images classified at step S 102 as being a detected component in the respective prescribed classifications.

At step S104, the CPU 11 controls the communication section 18 and transmits the designated material component images from among the plural material component images to the data management device 20 based on the goodness of fit computed at step S103. The designated material component images transmitted to the data management device 20 may, as described above, be designated manually by the user, or may be designated automatically by the image processing device 10.

At step S105, the CPU 11 determines whether or not the classification results have been returned from the data management device 20 for the designated material component images that were transmitted to the data management device 20 at step S104. Processing transitions to step S106 when it is determined that classification results have been returned from the data management device 20 (affirmative determination), and processing remains on standby at step S105 when it is determined that the classification results have not been returned from the data management device 20 (negative determination).

At step S106, the CPU 11 stores the classification results returned from the data management device 20 in, for example, the storage section 15, and then ends a cycle of processing by the present image processing program 15A. Note that classification results of classification as the designated detected components by the first classification section 11B, or of designated detected components of material component images stored in the storage section 15, may be overwritten, i.e. changed, based on the returned classification results.

Note that there is no limitation the image processing device 10 that transmitted the designated material component images to the data management device 20 being the device that receives the classification result of the designated material component images as at steps S105, S106, and a configuration may be adopted in which a device provided with a separate CPU receives the classification result of the designated material component images from the data management device 20.

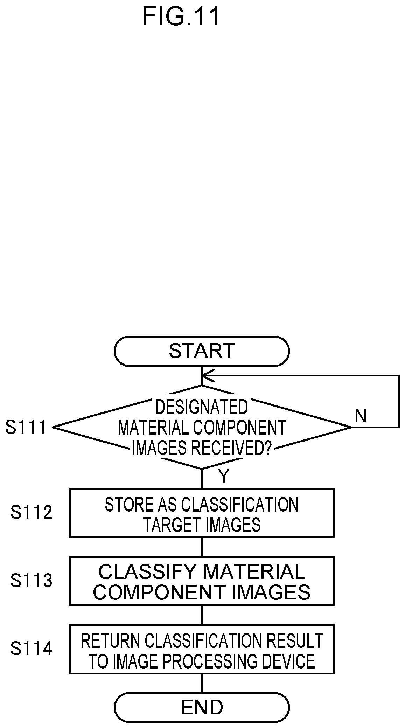

Next, description follows regarding operation of the data management device 20 according to the first exemplary embodiment, with reference to Fig. 11.

Fig. 11 is a flowchart illustrating an example of a flow of processing by the data management program 25A according to the first exemplary embodiment.

The image classification processing by the data management program 25A is executed by the CPU 21 of the data management device 20 writing the data management program 25A stored in the ROM 22 or the storage section 25 to the RAM 23 and executing the data management program 25A.

At step S111 of Fig. 11, the CPU 21 determines whether or not designated material component images transmitted from the image processing device 10 have been received. Processing transitions to step S112 when it is determined that designated material component images have been received (affirmative determination), and processing remains on standby at step S111 when it is determined that designated material component images have not been received (negative determination).

At step S112, the CPU 11 temporarily stores the designated material component images received at step S111 as a classification target image group in the storage section 25.

At step S113, the CPU 11 classifies the designated material component images that were stored as the classification target image group in the step S112 by classification as detected components using, for example, the second trained model 25C. As described above, the second trained model 25C is a model having a higher classification performance than the first trained model 15C. The designated material component images may be classified by a classification operation by a user such as an examination technician.

At step S114, the CPU 11 returns the classification results classified at step S 113 to the image processing device 10, and ends a cycle of processing by the present data management program 25A.

The present exemplary embodiment accordingly uses a goodness of fit computed for each of the material component images, and transmits to the data management device the material component images that are difficult to classify using the image processing device, such as unclassified material component images, material component images with concern about the classification result, and the like, and obtains classification results therefor from the data management device. This thereby enables appropriate classification to be performed even for material component image that are difficult to classify using the image processing device.

### Second Exemplary Embodiment

The first exemplary embodiment has been described for an embodiment in which the designated material component images are transmitted to the data management device. In the second exemplary embodiment, an embodiment will be described in which, when there are plural like material component images among the designated material component images, a representative image thereof is transmitted to the data management device.

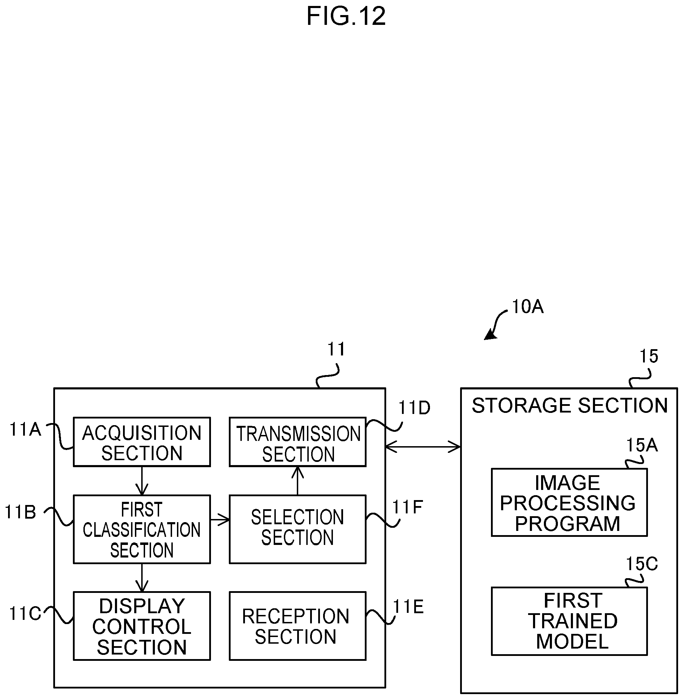

Fig. 12 is a block diagram illustrating an example of a functional configuration of an image processing device 10A according to the second exemplary embodiment.

As illustrated in Fig. 12, a CPU 11 of the image processing device 10A according to the present exemplary embodiment functions as an acquisition section 11A, a first classification section 11B, a display control section 11C, a transmission section 11D, a reception section 11E, and a selection section 11F. Note that the same configuration components to the configuration components of the image processing device 10 described in the first exemplary embodiment are appended with the same reference numerals, and repeated description thereof is omitted.

Suppose that in the present exemplary embodiment there are plural designated material component images. In such cases, the selection section 11F groups like material component images together from among the plural designated material component images, and selects a representative image from among the grouped like material component images. The transmission section 11D controls the communication section 18, and transmits the representative image selected by the selection section 11F to the data management device 20. Note that the representative image may be transmitted alone, or the representative image and designated images other than the representative image may be transmitted. In the data management device 20, the image classification processing described above is executed, and the classification results thereof are returned to the image processing device 10A.

The reception section 11E controls the communication section 18 and receives from the data management device 20 the classification result obtained by classifying the representative image as a detected component. In such cases the first classification section 11B takes the classification result of the representative image obtained from the data management device 20, and employs this as the classification result for the other material component image in the group containing the representative image. More specifically, a correspondence table (not illustrated in the drawings) that associates information enabling identification of a group including like material component images with information enabling identification of representative images thereof may be stored in the storage section 15, so as to enable the corresponding group to be identified from the information enabling identification of the representative image contained in the classification result of the representative image.

Adopting the above approach reduces the volume of data transmitted in comparison to cases in which all the designated material component images are transmitted. The volume of data for the material component images is generally large, and a known issue is the time taken, particular for uploading, even when using a dedicated line. Thus reducing the volume of data transmitted enables the time for uploading to be shortened, and enables a reduction in the load of communication with the data management device 20.

More specifically, the selection section 11F performs image analysis on the material component images and determines inter-image likeness. Possible index values to determine inter-image likeness include, for example, the following (a1) to (a3).
(a1) At least one value of the material component images selected from a number of pixels vertically and horizontally, a frequency (expressing complexity as an image), a contrast, a color (RGB), a brightness, or a surface area from binarization.
(a2) A value obtained by executing frequency analysis such as Fourier transformation or the like on the material component image.
(a3) A value obtained by executing spatial analysis such as matching analysis processing (analysis of a matching of position, coordinates, and the like of feature points contained in images) on the material component images.

As a method to determine the inter-image likeness, for example, a likeness between two images may be determined to be present when a difference between the two images of at least one value obtained from (a1) to (a3) falls within a prescribed range.

Moreover, as a method for selecting the representative image, for example, the representative image may be the image among the grouped images first received by the selection section 11F, or may be a freely selected image from among the grouped images.

Moreover, the selection section 11F may select at least one out of a number of representative images or data volume to send according to a total data volume of representative images to be sent or according to a state of congestion of a communication line employed (definable by communication speed or the like, for example). In such cases the at least one out of the number of representative images or data volume to be sent can be adjusted by appropriate change to the index value employed to determine the inter-image likeness.

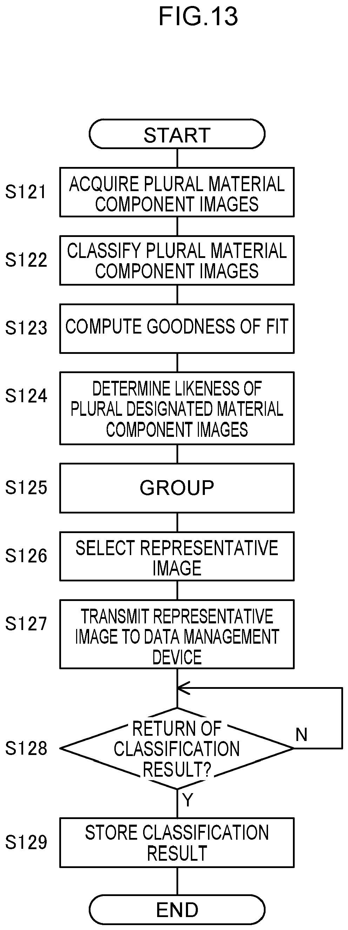

Next, description follows regarding operation of the image processing device 10A according to the second exemplary embodiment, with reference to Fig. 13.

Fig. 13 is a flowchart illustrating an example of a flow of processing by the image processing program 15A according to the second exemplary embodiment.

In the image classification processing by the image processing program 15A, the CPU 11 of the image processing device 10A writes the image processing program 15A stored on the ROM 12 or the storage section 15 to the RAM 13 and executes the image processing program 15A.

At step S121 of Fig. 13, from plural images (for example, 300 images, 1000 images) obtained by using the camera 74 to image the sample fluid flowing in the flow cell 40, the CPU 11 extracts as material component images plural types of material component contained in the sample fluid, so as to acquire plural extracted material component images.

At step S122, the CPU 11 uses, for example, the first trained model 15C to classify the plural material component images acquired at step S121 into detected components for the respective prescribed classifications (for example, type, size, shape, etc. of material component, presence or absence of nucleus or the like). The material component images classified for the respective prescribed classifications are temporarily stored in the storage section 15 by sample. Various known technologies may be applied as the method for classifying the material component images, such as, for example, machine learning methods, pattern matching methods, and the like.

At step S123, the CPU 11 computes a goodness of fit for each of the material component images classified as detected components for the respective prescribed classifications at step S122.

At step S124, based on the goodness of fit computed at step S123, the CPU 11 designates plural material component images as candidates for transmitting to the data management device 20 from among the plural material component images. The CPU 11 then determines likenesses between the plural designated material component images. More specifically, as described above, a likeness may be determined to be present between two images when a difference between the two images of at least one value obtained from (a1) to (a3) falls within a prescribed range.

At step S125, the CPU 11 groups like material component images determined to have a likeness at step S124 together.

At step S126, the CPU 11 selects a representative image from among the like material component images grouped at step S125. When this is performed, the CPU 11 stores a correspondence table that associates information enabling identification of a group including like material component images with information enabling identification of the representative images thereof in the storage section 15 as described above.

At step S127, the CPU 11 controls the communication section 18 and transmits the representative image selected at step S126 to the data management device 20.

At step S128, the CPU 11 determines whether or not there has been a return of the classification results from the data management device 20 for the representative image transmitted to the data management device 20 at step S127. Processing transitions to step S129 when it is determined that there has been a return of the classification results from the data management device 20 (affirmative determination), and processing remains on standby at step S128 when it is determined that there has been no return of the classification results from the data management device 20 (negative determination).

At step S129, the CPU 11 stores the classification result returned from the data management device 20 in, for example, the storage section 15, and ends one cycle of processing by the present image processing program 15A. When this is performed, the CPU 11 uses the information enabling the representative image to be identified contained in the classification result of the representative image from the data management device 20 to reference the correspondence table stored at step S126, identifies the corresponding group, and takes the classification result of the representative image as the classification result for the other material component images in the identified group.

The present exemplary embodiment thereby transmits only the representative image to the data management device in cases in which there are plural like material component images among the designated material component images. This thereby enables the volume of data transmitted to be reduced and the communication load with the data management device to be reduced, compared to cases in which all the designated material component images are transmitted.

Note that "processor" in each of the exemplary embodiments indicates a wide definition of processor, and encompasses general purpose processors (such as central processing units (CPU) and the like), and custom processors (such as graphics processing units (GPU), application specific integrated circuits (ASIC), field programmable gate arrays (FPGA), programmable logic devices, and the like).

Moreover, each of the actions of the processor in each of the exemplary embodiments is not necessarily achieved by a single processor alone, and may be achieved by cooperation between plural processors present at physically separated locations. Moreover, the sequence of each of the actions of the processor is not limited to the sequence described in the above exemplary embodiments, and may be rearranged as appropriate.

Explanation has been given regarding an example of an image processing device according to exemplary embodiments. The exemplary embodiments may be provided in the format of a program configured to cause a computer to execute the functions of the respective sections provided to the image processing device. The exemplary embodiments may be provided in the format of a computer-readable non-transitory storage medium stored with such a program.

Configurations of the image processing device described in the above exemplary embodiments are moreover merely examples thereof, and may be modified according to circumstances within a range not departing from the spirit thereof. Material component image display is not limited to that in the exemplary embodiments described above, and for example material component images may be displayed alongside each other left to right horizontally. The display positions of the respective buttons may also be modified as appropriate.

The processing flow of the program described in the above exemplary embodiments is moreover also merely an example thereof, and redundant steps may be omitted, new steps may be added, or the processing sequence may be altered within a range not departing from the scope of the present invention.

Although explanation in each of the above exemplary embodiments is regarding a case in which the processing of the exemplary embodiments is implemented by a software configuration employing a computer by execution of a program, there is no limitation thereto. For example, an exemplary embodiment may be implemented by a hardware configuration, or by a combination of a hardware configuration and a software configuration.

## Claims

1. An image processing device (10, 10A) comprising:
an acquisition section (11A) that acquires a plurality of material component images;
a first classification section (11B) that classifies the plurality of material component images as detected components for respective prescribed classifications and computes a goodness of fit for classification results; and
a transmission section (11D) that, based on the goodness of fit computed by the first classification section, transmits designated material component images from among the plurality of material component images via a network line to a data management device (20).

2. The image processing device of claim 1, wherein:
the transmission section (11D) transmits any material component images from among the plurality of material component images for which the goodness of fit is less than or equal to a threshold value to the data management device (20) as the designated material component images.

3. The image processing device of claim 1 or claim 2, wherein:
the first classification section (11B) utilizes a first trained model (15C) to classify the plurality of material component images, the first trained model being generated by performing machine learning on training data obtained by associating detected components of respective prescribed classifications with each material component image obtained in the past, and the first trained model being input with material component images and outputting detected components for the respective prescribed classifications.

4. The image processing device of any of claim 1 to claim 3, further comprising a reception section (11E) that receives from the data management device (20) a classification result obtained by classifying the designated material component images as detected components.

5. The image processing device of any of claim 1 to claim 4, wherein:
there is a plurality of the designated material component images;
the image processing device (10, 10A) further comprises a selection section (11F) that groups together like material component images from among the plurality of designated material component images, and that selects a representative image as a representative from among the grouped like material component images; and
the transmission section (11D) transmits the representative image selected by the selection section to the data management device (20).

6. A data management device (20) configured to be connected to the image processing device (10, 10A) of any of claim 1 to claim 5 via a network line, wherein the data management device comprises:
a second classification section (21B) that classifies designated material component images received from the image processing device as detected components; and
a return section (21D) that returns classification results by the second classification section to the image processing device.

7. An image processing system (100) comprising:
the image processing device (10, 10A) of any of claim 1 to claim 5; and
a data management device (20) connected to the image processing device via a network line,
wherein the data management device includes:
a second classification section (21B) that classifies the designated material component images received from the image processing device as detected components; and
a return section (21D) that returns classification results by the second classification section to the image processing device (10, 10A).

8. The image processing system of claim 7, wherein:
the first classification section (11B) utilizes a first trained model (15C) to classify the material component images, the first trained model being generated by performing machine learning on training data obtained by associating detected components of respective prescribed classifications with each material component image obtained in the past, and the first trained model (15C) being input with material component images and outputting detected components for the respective prescribed classifications.

9. The image processing system of claim 8, wherein:
the second classification section (21B) classifies the designated material component images using a second trained model (25C) that was generated by performing machine learning using separate training data including more associations of detected components than the training data in the first trained model (15C) and that uses a same algorithm as an algorithm of the machine learning in the first trained model (15C).

10. The image processing system of claim 8, wherein:
the second classification section (21B) classifies the designated material component images using a second trained model (25C) that was generated by performing machine learning on the training data using a separate algorithm having a higher classification performance than an algorithm of the machine learning in the first trained model (15C).

11. The image processing system of claim 8, wherein the second classification section (21B) classifies the designated material component images using a second trained model (25C) that was generated by performing machine learning using separate training data including more associations of detected components than the training data in the first trained model (15C) and using a separate algorithm having a higher classification performance than an algorithm of the machine learning in the first trained model (15C).

12. The image processing system of claim 7 or claim 8, wherein:
the data management device (20) further includes a display (26) that displays the designated material component images; and
the second classification section (21B) classifies the designated material component images according to a classification operation by a user on the designated material component images being displayed on the display (26).

13. The image processing system of any of claim 7 to claim 12, wherein the designated material component images include a material component image unable to be classified as a detected component for the respective prescribed classifications by the first classification section (11B).

14. An image processing method performed by an image processing device (10, 10A), the method comprising:
acquiring a plurality of material component images;
classifying the plurality of material component images as detected components for respective prescribed classifications and computing a goodness of fit for classification results; and
based on the computed goodness of fit, transmitting designated material component images from among the plurality of material component images via a network line to a data management device (20).

15. A non-transitory storage medium storing an image processing program (15A) that causes a computer to execute processing, the processing comprising:
acquiring a plurality of material component images;
classifying the plurality of material component images as detected components for respective prescribed classifications and computing a goodness of fit for classification results; and
based on the computed goodness of fit, transmitting designated material component images from among the plurality of material component images via a network line to a data management device (20).
